# EUROPEAN PATENT APPLICATION

(11) **EP 4 074 777 A1**
(43) Date of publication of application: **19.10.2022**
(21) Application number: 20907642.1
(22) Date of filing: 23.12.2020
(51) Int. Cl.: C08L 27/12, C08L 67/00

(54) **COMPOSITION, INJECTION MOLDED ARTICLE, AND MOLDING AUXILIARY AGENT**

(30) Priority: 24.12.2019 CN 201911347181
(71) Applicant: Daikin Industries, Ltd., Osaka-shi, Osaka 530-8323 (JP); Tsinghua University, Beijing 100084 (CN)
(72) Inventor: XIE, Xuming, Beijing 100084 (CN); UEDA, Yuki, Osaka-Shi, Osaka 530-8323 (JP); KOMORI, Masaji, Osaka-Shi, Osaka 530-8323 (JP); YAMAUCHI, Akiyoshi, Osaka-Shi, Osaka 530-8323 (JP)
(74) Representative: Hoffmann Eitle
(86) International application number: PCT/JP2020/048184
(87) International publication number: WO 2021/132341

(57) **Abstract**

The disclosure provides a composition capable of providing an injection molded article having good appearance and excellent tensile elongation. The disclosure relates to a composition containing a melt-moldable fluororesin having a 1% decomposition temperature of 300°C or higher and a thermotropic liquid crystal polymer, 90 mol% or more of all repeating units of the thermotropic liquid crystal polymer having an aromatic structure. The fluororesin is contained in an amount of 99.99 to 97% by mass and the thermotropic liquid crystal polymer is contained in an amount of 0.01 to 3% by mass relative to the composition.

## Description

### TECHNICAL FIELD

The disclosure relates to compositions, injection molded articles, and molding aids.

### BACKGROUND ART

Patent Literature 1 discloses a composition containing 90 wt% of polychlorotrifluoroethylene and 10 wt% of a wholly aromatic polyester liquid crystal polymer.

Patent Literature 2 discloses a composition containing a copolymerized resin of tetrafluoroethylene and hexafluoropropylene and a thermoplastic liquid crystal polymer (TLCP) in a weight ratio of 50/50.

Patent Literature 3 discloses a composition containing 50% by weight of polytetrafluoroethylene and 50% by weight of liquid crystal polyester.

Patent Literature 4 discloses a composition containing 10 to 97% by weight of a base polymer such as polypropylene or polyethersulfone and 3 to 90% by weight of a liquid crystal polymer.

### CITATION LIST

### - Patent Literature

Patent Literature 1: JP H02-110156 A
Patent Literature 2: JP H02-032147 A
Patent Literature 3: JP S63-230756 A
Patent Literature 4: JP S56-115357 A

### SUMMARY OF INVENTION

### - Technical Problem

The disclosure aims to provide a composition capable of providing an injection molded article having good appearance and excellent tensile elongation. The disclosure also aims to provide an injection molded article having excellent tensile elongation. The disclosure also aims to provide a molding aid that enables production of an injection molded article having good appearance and excellent tensile elongation.

### - Solution to Problem

The disclosure relates to a composition containing:
a melt-moldable fluororesin having a 1% decomposition temperature of 300°C or higher; and
a thermotropic liquid crystal polymer,
90 mol% or more of all repeating units of the thermotropic liquid crystal polymer having an aromatic structure,
the fluororesin being contained in an amount of 99.99 to 97% by mass and the thermotropic liquid crystal polymer being contained in an amount of 0.01 to 3% by mass relative to the composition.

The fluororesin in the composition is preferably polychlorotrifluoroethylene.

The composition preferably has a melt flow rate of 1.0 to 13 g/10 min at 280°C.

The disclosure also relates to an injection molded article containing:
a melt-moldable fluororesin having a 1% decomposition temperature of 300°C or higher; and
a thermotropic liquid crystal polymer,
the injection molded article having a tensile elongation at break of 15% or higher at 25°C.

The fluororesin in the injection molded article is preferably polychlorotrifluoroethylene.

The disclosure also relates to a molding aid for injection molding a fluororesin, the molding aid containing a thermotropic liquid crystal polymer in which 90 mol% or more of all repeating units have an aromatic structure.

### - Advantageous Effects of Invention

The disclosure can provide a composition capable of providing an injection molded article having good appearance and excellent tensile elongation. The disclosure can also provide an injection molded article having excellent tensile elongation. The disclosure can also provide a molding aid that enables production of an injection molded article having good appearance and excellent tensile elongation.

### DESCRIPTION OF EMBODIMENTS

Fluororesin is advantageously molded by injection molding rather than compression molding or extrusion molding in terms of processing cost. Still, injection molding of fluororesin having high melt viscosity alone may cause generation of a surface skin layer, which may result in a molded article that has poor appearance and is brittle (has low tensile elongation). Injection molding at high temperature for the purpose of reducing the melt viscosity may cause decomposition of fluororesin, which may result in a molded article that has low tensile elongation and is brittle.

The inventors found that injection molding a specific fluororesin combined with a specific amount of a thermotropic liquid crystal polymer having a specific structure can provide a molded article having good appearance and excellent tensile elongation.

Hereinafter, the disclosure is described in detail.

The disclosure relates to a composition containing:
a melt-moldable fluororesin having a 1% decomposition temperature of 300°C or higher; and
a thermotropic liquid crystal polymer,
90 mol% or more of all repeating units of the thermotropic liquid crystal polymer having an aromatic structure,
the fluororesin being contained in an amount of 99.99 to 97% by mass and the thermotropic liquid crystal polymer being contained in an amount of 0.01 to 3% by mass relative to the composition.

The composition of the disclosure can provide an injection molded article having good appearance and excellent tensile elongation.

The fluororesin in the composition of the disclosure has a 1% decomposition temperature of 300°C or higher. The 1% decomposition temperature is preferably 320°C or higher, more preferably 340°C or higher, while it may be 450°C or lower.

The 1% decomposition temperature is the temperature at which 1% weight reduction is observed when the temperature of the fluororesin is increased at 10°C/min in the air atmosphere using a thermogravimetry-differential thermal analyzer.

The fluororesin is melt-moldable. The melt-moldable means that a polymer is processible in a molten state using conventional processing devices such as an extruder and an injection molding machine. Thus, the fluororesin commonly has a melt flow rate (MFR) of 0.01 to 100 g/10 min.

The MFR is a value determined as the mass (g/10 min) of a polymer that flows out of a nozzle having an inner diameter of 2 mm and a length of 8 mm at a predetermined measurement temperature and load in accordance with the type of the fluoropolymer using a melt indexer (available from Yasuda Seiki Seisakusho Ltd.) in conformity with ASTM D1238.

The fluororesin may have a melting point of 100°C to 347°C. The melting point is preferably 150°C or higher, more preferably 180°C or higher, still more preferably 205°C or higher, particularly preferably 210°C or higher, while preferably 320°C or lower, more preferably 310°C or lower, still more preferably 265°C or lower, further more preferably 225°C or lower, particularly preferably 216°C or lower.

The melting point is the temperature corresponding to the maximum value on a heat-of-fusion curve obtained by increasing the temperature at a rate of 10°C/min using a differential scanning calorimeter (DSC).

Examples of the fluororesin include polychlorotrifluoroethylene (PCTFE), a tetrafluoroethylene (TFE)/perfluoro(alkyl vinyl ether) (PAVE) copolymer (PFA), a TFE/hexafluoropropylene (HFP) copolymer (FEP), an ethylene (Et)/TFE copolymer (ETFE), an Et/TFE/HFP copolymer, a chlorotrifluoroethylene (CTFE)/TFE copolymer, an Et/CTFE copolymer, a TFE/HFP/vinylidene fluoride (VDF) copolymer (THV), and polyvinylidene fluoride (PVDF).

In particular, the fluororesin preferably includes at least one selected from the group consisting of PCTFE, ETFE, and THV, and is more preferably PCTFE.

PCTFE has high melt viscosity as well as a melting point and decomposition temperature that are close to each other, and therefore significantly raises issues of appearance (surface skin layer) and tensile elongation (brittleness) when it alone is subjected to injection molding.

The composition of the disclosure can provide an injection molded article having good appearance and excellent tensile elongation even in the case where the fluororesin is PCTFE.

Examples of the PCTFE include a chlorotrifluoroethylene (CTFE) homopolymer and a copolymer of a polymerized unit ("CTFE unit") based on CTFE and a polymerized unit ("monomer (α) unit") based on a monomer (α) polymerizable with CTFE.

The PCTFE preferably contains the CTFE unit in an amount of 90 to 100 mol%. In terms of better moisture proof performance, the amount of the CTFE unit is more preferably 98 to 100 mol%, still more preferably 99 to 100 mol%.

For the PCTFE that is a copolymer of a CTFE unit and a monomer (α) unit, the monomer (α) may be any monomer copolymerizable with CTFE. Examples thereof include tetrafluoroethylene (TFE), ethylene (Et), vinylidene fluoride (VdF), perfluoro(alkylvinyl)ether (PAVE), a vinyl monomer represented by the following formula (I):

CX³X⁴=CX¹(CF₂)ₙX² (I)

(wherein X¹, X³, and X⁴ are the same as or different from each other, and are each a hydrogen atom or a fluorine atom; X² is a hydrogen atom, a fluorine atom, or a chlorine atom; and n is an integer of 1 to 10); and an alkyl perfluorovinyl ether derivative represented by the following formula (II):

CF₂=CF-OCH₂-Rf (II)

wherein Rf is a C1-C5 perfluoroalkyl group.

Examples of the PAVE include perfluoro(methyl vinyl ether) (PMVE), perfluoro(ethyl vinyl ether) (PEVE), perfluoro(propyl vinyl ether) (PPVE), and perfluoro(butyl vinyl ether).

Examples of the vinyl monomer represented by the formula (I) include, but are not limited to, hexafluoropropylene (HFP), perfluoro(1,1,2-trihydro-1-hexene), perfluoro(1,1,5-trihydro-1-pentene), and perfluoro(alkyl)ethylene represented by the following formula (III):

H₂C=CX⁵Rf⁵ (III)

wherein X⁵ is H, F, or CF₃; and Rf⁵ is a C1-C10 perfluoroalkyl group. The perfluoro(alkyl)ethylene is preferably perfluoro(butyl) ethylene.

The alkyl perfluorovinyl ether derivative represented by the formula (II) is preferably one in which Rf is a C1-C3 perfluoroalkyl group, more preferably CF₂=CF-OCH₂-CF₂CF₃.

The monomer (α) polymerizable with CTFE preferably includes at least one selected from the group consisting of TFE, Et, VdF, PAVE, and a vinyl monomer represented by the formula (I). One or two or more of the monomers (α) may be used.

The monomer (α) used may also be an unsaturated carboxylic acid copolymerizable with CTFE. Examples of the unsaturated carboxylic acid include, but are not limited to, C3-C6 unsaturated aliphatic carboxylic acids such as (meth)acrylic acid, crotonic acid, maleic acid, fumaric acid, itaconic acid, citraconic acid, mesaconic acid, and aconitic acid. The monomer (α) may also be a C3-C6 unsaturated aliphatic polycarboxylic acid.

Examples of the unsaturated aliphatic polycarboxylic acid include, but are not limited to, maleic acid, fumaric acid, itaconic acid, citraconic acid, mesaconic acid, and aconitic acid. Those which can be present in the form of an acid anhydride among these, such as maleic acid, itaconic acid, and citraconic acid, may be in the form of an acid anhydride.

Two or more of the monomers (α) may be used. Still, when one of these is VDF, PAVE, and/or HFP, it may not be used in combination with itaconic acid, citraconic acid, or an acid anhydride thereof.

Herein, the amounts of the monomer units constituting the fluororesin can be calculated by appropriate combination of NMR, FT-IR, elemental analysis, and X-ray fluorescence analysis in accordance with the types of the monomers.

The PCTFE preferably has a melting point of 205°C to 225°C, more preferably 210°C to 216°C. The melting point herein means the temperature corresponding to the maximum value on a heat-of-fusion curve obtained by increasing the temperature at a rate of 10°C/min using a differential scanning calorimeter (DSC).

The PCTFE preferably has a melt flow rate (MFR) of 0.1 to 1 g/10 min. The MFR is a value obtained by measurement under conditions including a temperature of 280°C and a load of 10.0 kg in conformity with ASTM D3307.

In the thermotropic liquid crystal polymer in the composition of the disclosure, 90 mol% or more of all repeating units have an aromatic structure. Use of a thermotropic liquid crystal polymer having such a specific structure can reduce decomposition and deterioration of fluororesin at high temperature, which can lead to a molded article having excellent tensile elongation even by injection molding at high temperature. Also, such applicability of injection molding at high temperature can lead to an injection molded article that is less likely to have a surface skin layer and that has good appearance.

The amount of the repeating units having an aromatic structure is preferably 92 mol% or more, more preferably 95 mol% or more, still more preferably 97 mol% or more of all repeating units of the thermotropic liquid crystal polymer. The upper limit may be 100 mol%.

The amount of the repeating units having an aromatic structure can be measured by solid state NMR or by NMR on a decomposition product obtained by decomposing the liquid crystal polymer with a strong acid or a strong base.

The thermotropic liquid crystal polymer may be a wholly aromatic thermotropic liquid crystal polymer.

The thermotropic liquid crystal polymer is a polymer that turns into a nematic or other liquid crystal state by heat.

Each repeating unit having an aromatic structure preferably has neither an aliphatic group nor an alicyclic group at a portion constituting the main chain of the thermotropic liquid crystal polymer.

Examples of the repeating unit having an aromatic structure include, but are not limited to, an aromatic oxycarbonyl unit, an aromatic dicarbonyl unit, an aromatic dioxy unit, an aromatic oxydicarbonyl unit, an aromatic aminooxy unit, an aromatic diamino unit, and an aromatic aminocarbonyl unit.

Specific examples of monomers to give the aromatic oxycarbonyl unit include aromatic hydroxycarboxylic acids such as 4-hydroxybenzoic acid, 3-hydroxybenzoic acid, 2-hydroxybenzoic acid, 6-hydroxy-2-naphthoic acid, 5-hydroxy-2-naphthoic acid, 3-hydroxy-2-naphthoic acid, 4'-hydroxyphenyl-4-benzoic acid, 3'-hydroxyphenyl-4-benzoic acid, and 4'-hydroxyphenyl-3-benzoic acid, and alkyl-, alkoxy-, or halogen-substituted products thereof, and ester-formable derivatives thereof such as acylated products, ester derivatives, and acid halides.

Specific examples of monomers to give the aromatic dicarbonyl unit include aromatic dicarboxylic acids such as terephthalic acid, isophthalic acid, 2,6-naphthalenedicarboxylic acid, 1,6-naphthalenedicarboxylic acid, 2,7-naphthalenedicarboxylic acid, 1,4-naphthalenedicarboxylic acid, and 4,4'-dicarboxybiphenyl, and alkyl-, alkoxy-, or halogen-substituted products thereof, and ester-formable derivatives thereof such as ester derivatives and acid halides.

Specific examples of monomers to give the aromatic dioxy unit include aromatic diols such as hydroquinone, resorcin, 2,6-dihydroxynaphthalene, 2,7-dihydroxynaphthalene, 1,6-dihydroxynaphthalene, 1,4-dihydroxynaphthalene, 4,4'-dihydroxybiphenyl, 3,3'-dihydroxybiphenyl, 3,4'-dihydroxybiphenyl, and 4,4'-dihydroxybiphenyl ether, and alkyl-, alkoxy-, or halogen-substituted products thereof, and ester-formable derivatives thereof such as acylated products.

Specific examples of monomers to give the aromatic oxydicarbonyl unit include hydroxyaromatic dicarboxylic acids such as 3-hydroxy-2,7-naphthalenedicarboxylic acid, 4-hydroxyisophthalic acid, and 5-hydroxyisophthalic acid, and alkyl-, alkoxy-, or halogen-substituted products thereof, and ester-formable derivatives thereof such as acylated products, ester derivatives, and acid halides.

Specific examples of monomers to give the aromatic aminooxy unit include aromatic hydroxyamines such as 4-aminophenol, 3-aminophenol, 4-amino-1-naphthol, 5-amino-1-naphthol, 8-amino-2-naphthol, and 4-amino-4'-hydroxybiphenyl, and alkyl-, alkoxy-, or halogen-substituted products thereof, and ester-formable derivatives thereof such as acylated products.

Specific examples of monomers to give the aromatic diamino unit include aromatic diamines such as 1,4-diaminobenzene, 1,3-diaminobenzene, 1,5-diaminonaphthalene, and 1,8-diaminonaphthalene, and alkyl-, alkoxy-, or halogen-substituted products thereof, and amide-formable derivatives thereof such as acylated products.

Specific examples of monomers to give the aromatic aminocarbonyl unit include aromatic aminocarboxylic acids such as 4-aminobenzoic acid, 3-aminobenzoic acid, and 6-amino-2-naphthoic acid, and alkyl-, alkoxy-, or halogen-substituted products thereof, and ester-formable derivatives thereof such as acylated products, ester derivatives, and acid halides.

Examples of the thermotropic liquid crystal polymer in the disclosure include, but are not limited to,
type I liquid crystal polymers (e.g., biphenol/benzoic acid/paraoxybenzoic acid (POB) copolymers); and
type II liquid crystal polymers (e.g., hydroxynaphthoic acid (HNA)/POB copolymers).

The thermotropic liquid crystal polymer may have any liquid crystal transition starting temperature that is preferably not higher than the temperature of processing PCTFE, for example, preferably 340°C or lower, more preferably 330°C or lower, still more preferably 320°C or lower, while preferably 200°C or higher, more preferably 210°C or higher. The liquid crystal transition starting temperature herein means the temperature at which a thermotropic liquid crystal polymer mounted on the sample holder of a polarization microscope and heated becomes opalescent under shear stress.

The composition of the disclosure contains the fluororesin in an amount of 99.99 to 97% by mass and the thermotropic liquid crystal polymer in an amount of 0.01 to 3% by mass relative to the composition. In order to provide an injection molded article having much better appearance and much better tensile elongation, preferably, the amount of the fluororesin is 99.9 to 98% by mass and the amount of the thermotropic liquid crystal polymer is 0.1 to 2% by mass relative to the composition; more preferably, the amount of the fluororesin is 99.9 to 99% by mass and the amount of the thermotropic liquid crystal polymer is 0.1 to 1% by mass relative to the composition; still more preferably, the amount of the fluororesin is 99.5 to 99% by mass and the amount of the thermotropic liquid crystal polymer is 0.5 to 1% by mass, relative to the composition.

The composition of the disclosure may further contain a thermotropic liquid crystal polymer other than the aforementioned specific thermotropic liquid crystal polymers, such as a type III liquid crystal polymer (e.g., POB/ethylene terephthalate copolymers).

The composition of the disclosure may further contain any of different components other than those described above. Examples of the different components include reinforcing fibers, fillers, plasticizers, processing aids, mold lubricants, pigments, flame retarders, lubricants, light stabilizers, weathering agents, conducting agents, antistatic agents, ultraviolet absorbers, antioxidants, foaming agents, perfumes, oils, softeners, dehydrofluorinating agents, nucleating agents, and carbon nanotube. Examples of the reinforcing fibers include carbon fibers, glass fibers, and basalt fibers. Examples of the fillers include polytetrafluoroethylene, mica, silica, talc, cerite, clay, titanium oxide, and barium sulfate. An example of the conducting agents is carbon black. Examples of the plasticizers include dioctyl phthalic acid and pentaerythritol. Examples of the processing aids include carnauba wax, sulfone compounds, low molecular weight polyethylene, and fluorine-based aids. Examples of the dehydrofluorinating agents include organic oniums and amidines.

The composition of the disclosure preferably has a melt flow rate (MFR) at 280°C of 1.0 to 13 g/10 min, more preferably 5.0 to 10 g/10 min, still more preferably 6.0 to 10 g/10 min. The composition having a MFR within this range can provide an injection molded article having much better appearance and much better tensile elongation.

The MFR is a value obtained by measurement under conditions including a temperature of 280°C and a load of 10.0 kg in conformity with ASTM D1238.

The MFR measurement is preferably performed after residues at the die portion are sufficiently removed.

The composition of the disclosure preferably has a post-injection-molding melt flow rate (MFR) determined by the following method of 4.0 to 45.0 g/10 min, more preferably 6.0 to 35.0 g/10 min, still more preferably 11.0 to 25.0 g/10 min. The composition having a post-injection-molding MFR within this range can provide an injection molded article having much better appearance and much better tensile elongation.

### (Measurement method)

The composition is injection-molded at a cylinder temperature of 330°C, a nozzle temperature of 340°C, and a mold temperature of 100°C. Using a shredded product of the resulting injection molded article, the MFR is determined under conditions including a temperature of 280°C and a load of 10.0 kg in conformity with ASTM D1238, which is defined as the post-injection-molding MFR.

The composition of the disclosure may be produced by, for example, kneading the fluororesin and the thermotropic liquid crystal polymer.

The kneading may be performed using any device such as an open roll mill, a Banbury mixer, a pressure kneader, or an extruder. In order to apply a high shear force, preferred is a pressure kneader or an extruder such as a twin-screw extruder.

The kneading is preferably melt-kneading.

The kneading temperature is preferably higher than 330°C, more preferably 335°C or higher, still more preferably 340°C or higher, while preferably 360°C or lower.

Kneading at a temperature within this range can provide a composition that is to give an injection molded article having much better appearance and much better tensile elongation.

Molding the composition of the disclosure can provide a molded article. Molding may be performed by any method, such as compression molding, transfer molding, extrusion molding, injection molding, or calender molding. In terms of processing cost, injection molding is preferred.

The disclosure also relates to an injection molded article containing: a melt-moldable fluororesin having a 1% decomposition temperature of 300°C or higher; and a thermotropic liquid crystal polymer,
the injection molded article having a tensile elongation at break of 15% or higher at 25°C.

The injection molded article of the disclosure has excellent tensile elongation even though it is an injection molded article of the above specific fluororesin.

The injection molded article of the disclosure has a tensile elongation at break at 25°C of 15% or higher, preferably 20% or higher, more preferably 25% or higher. The upper limit may be, but is not limited to, 250%, for example.

The tensile elongation at break is determined by a tensile test at 25°C and at a speed of 10 mm/min using a type V dumbbell specimen and a Tensilon universal material testing instrument (available from A&D Co., Ltd.) in conformity with ASTM D638.

The injection molded article of the disclosure preferably has no skin layer on the surface.

Examples of the fluororesin and thermotropic liquid crystal polymer contained in the injection molded article of the disclosure include the same as the aforementioned fluororesins and thermotropic liquid crystal polymers that may be contained in the composition of the disclosure, and the amounts thereof may also be the same as described above.

In particular, the fluororesin preferably includes at least one selected from the group consisting of PCTFE, ETFE, and THV, and is more preferably PCTFE. The injection molded article of the disclosure has excellent tensile elongation even though it is an injection molded article of PCTFE.

The injection molded article of the disclosure may be produced by, for example, injection-molding the aforementioned composition of the disclosure.

The composition and injection molded article of the disclosure can be used for various applications such as semiconductor-related articles, drug wrapping films, barrier films, industrial equipment, electrical components, and automotive components.

The disclosure also relates to a molding aid for injection molding a fluororesin, the molding aid containing a thermotropic liquid crystal polymer in which 90 mol% or more of all repeating units have an aromatic structure.

Adding the molding aid of the disclosure to a fluororesin and injection-molding the mixture can provide an injection molded article having good appearance and excellent tensile elongation.

The thermotropic liquid crystal polymer used and contained in the molding aid of the disclosure may be the same thermotropic liquid crystal polymer in the composition of the disclosure, and preferred examples thereof are also the same.

The molding aid of the disclosure may consist only of the thermotropic liquid crystal polymer.

The fluororesin to be combined with the molding aid of the disclosure is preferably a melt-moldable fluororesin.

The fluororesin preferably has a 1% decomposition temperature of 300°C or higher, more preferably 320°C or higher, still more preferably 340°C or higher, while it may be 450°C or lower.

Examples of the fluororesin include the same as the fluororesins mentioned as examples of the fluororesin in the composition of the disclosure. Preferred among these is at least one selected from the group consisting of PCTFE, ETFE, and THV, and more preferred is PCTFE.

Examples of the PCTFE include the same as those mentioned for the PCTFE in the composition of the disclosure, and preferred examples thereof are also the same.

In order to provide an injection molded article having much better appearance and much better tensile elongation, the molding aid of the disclosure is preferably used such that the proportion of the thermotropic liquid crystal polymer is 0.01 to 3% by mass, more preferably such that the proportion of the thermotropic liquid crystal polymer is 0.1 to 2% by mass, still more preferably such that the proportion of the thermotropic liquid crystal polymer is 0.1 to 1% by mass, further more preferably such that the proportion of the thermotropic liquid crystal polymer is 0.5 to 1% by mass, relative to the sum of the amounts of the fluororesin and the thermotropic liquid crystal polymer.

The molding aid of the disclosure is preferably kneaded with the fluororesin before injection molding. The kneading is preferably melt-kneading.

The kneading temperature is preferably higher than 330°C, more preferably 335°C or higher, still more preferably 340°C or higher, while preferably 360°C or lower.

Kneading at a temperature within this range can lead to an injection molded article having much better appearance and much better tensile elongation.

### EXAMPLES

The disclosure is described in more detail below with reference to examples, but the disclosure is not intended to be limited to these examples.

Materials used in the examples and comparative examples are listed below.

Polychlorotrifluoroethylene: CTFE 100 mol%, melting point: 211°C, MFR at 280°C: 0.49 g/10 min, 1% decomposition temperature: 371°C

Thermotropic liquid crystal polymer 1 (LCP1): UENO LCP A-8100 available from Ueno Fine Chemicals Industry, Ltd.

Thermotropic liquid crystal polymer 2 (LCP2): Siveras LX70E available from Toray Industries, Inc.

### Example 1

PCTFE and LCP1 were mixed in the ratio shown in Table 1 and kneaded at a cylinder temperature of 350°C using a twin-screw extruder, whereby a composition was produced. The MFR of the resulting composition was determined by the following method. The result is shown in Table 1.

### <Melt flow rate (MFR)>

The MFR was determined as the mass (g/10 min) of the polymer that was held at 280°C for five minutes and then flowed out of a nozzle having an inner diameter of 2.095 mm and a length of 8 mm per 10 minutes at a load of 10 kg using a melt indexer (available from Toyo Seiki Seisakusho, Ltd.) in conformity with ASTM D1238.

The composition obtained above was injection-molded using an injection molding machine set to have a cylinder temperature of 330°C, a nozzle temperature of 340°C, and a mold temperature of 100°C, whereby an ASTM type V dumbbell specimen (molded article) was obtained. Using the resulting dumbbell specimen, the tensile elongation at break was determined by the following method. The presence of a skin layer on the surface of the specimen was checked by visually observing the shape of the fracture cross section. Using a shredded product of the resulting dumbbell specimen, the MFR (post-injection-molding MFR) was determined under the above conditions. The results are shown in Table 1.

### <Tensile elongation at break>

The resulting dumbbell specimen was subjected to a tensile test at a speed of 10 mm/min and 25°C using a Tensilon universal material testing instrument (available from A&D Co., Ltd.), and the tensile elongation at break was determined in conformity with ASTM D638.

### Example 2

A composition and a specimen were produced and the measurements were performed as in Example 1 except that LCP2 was used instead of LCP1. The results are shown in Table 1.

### Comparative Example 1

PCTFE was injection-molded using an injection molding machine set to have a cylinder temperature of 330°C, a nozzle temperature of 340°C, and a mold temperature of 100°C, whereby an ASTM type V dumbbell specimen (molded article) was obtained. Using the resulting dumbbell specimen, the tensile elongation at break and post-injection-molding MFR were determined as in Example 1. The presence of a skin layer on the surface of the specimen was checked by visually observing the shape of the fracture cross section. The results are shown in Table 1.

**[Table 1]**

| | | Example 1 | Example 2 | Comparative Example 1 |
|---|---|---|---|---|
| Composition (parts by mass) | PCTFE | 100 | 100 | 100 |
| | LCP1 | 1 | - | - |
| | LCP2 | - | 1 | - |
| Kneading temperature (°C) | | 350 | 350 | - |
| MFR (g/10min) | | 7.5 | 9.5 | 0.49 |
| Post -injection-molding MFR (g/10 min) | | 15.6 | 17.2 | 7.0 |
| Tensile elongation at break (%) | | 29 | 31 | 13 |
| Skin layer | | Absent | Absent | Present |

## Claims

1. A composition comprising:
a melt-moldable fluororesin having a 1% decomposition temperature of 300°C or higher; and
a thermotropic liquid crystal polymer,
90 mol% or more of all repeating units of the thermotropic liquid crystal polymer having an aromatic structure,
the fluororesin being contained in an amount of 99.99 to 97% by mass and the thermotropic liquid crystal polymer being contained in an amount of 0.01 to 3% by mass relative to the composition.

2. The composition according to claim 1,
wherein the fluororesin is polychlorotrifluoroethylene.

3. The composition according to claim 1 or 2, wherein the composition has a melt flow rate of 1.0 to 13 g/10 min at 280°C.

4. An injection molded article comprising:
a melt-moldable fluororesin having a 1% decomposition temperature of 300°C or higher; and
a thermotropic liquid crystal polymer,
the injection molded article having a tensile elongation at break of 15% or higher at 25°C.

5. The injection molded article according to claim 4,
wherein the fluororesin is polychlorotrifluoroethylene.

6. A molding aid for injection molding a fluororesin, the molding aid comprising
a thermotropic liquid crystal polymer in which 90 mol% or more of all repeating units have an aromatic structure.
